# EUROPEAN PATENT APPLICATION

(11) **EP 1 175 999 A1**
(43) Date of publication of application: **30.01.2002**
(21) Application number: 00202676.3
(22) Date of filing: 25.07.2000
(51) Int. Cl.: B32B 7/06, A47L 13/16

(54) **Fabric having prolonged and improved wiping characteristics**

(71) Applicant: SCA Hygiene Products GmbH, 68264 Mannheim (DE)
(72) Inventor: Grösgen, Beatrix, 83022 Rosenheim (DE)
(74) Representative: Olsson, Stefan

(57) **Abstract**

The present invention relates to a fabric for removing undesirable matter from an object by wiping, said fabric comprises a plurality of individual sheets, bonding means for joining said individual sheets together, wherein said bonding means permit a single individual sheet to be easily removed from said fabric.

## Description

### TECHNICAL FIELD

This invention relates to a fabric having prolonged and improved wiping characteristics and said fabric comprises a plurality of individual sheets wherein each individual sheet may be peeled off.

Further, the present invention relates to a fabric for removing undesirable matter from an object by wiping, said fabric comprises a plurality of individual sheets, bonding means for joining said individual sheets together, wherein said bonding means permit a single individual sheet to be easily removed from said fabric.

### BACKGROUND ART

Today, washable cloth industrial towels, rags recovered from discarded clothing and disposable wipes constitute the principal wipe market. The washable cloth industrial towels lack uniformity, usually contain residual oils and may contain metal chips or other abrasive materials. As to rags, these are generally non-uniform in size, composition and wiping properties, and increased use of hydrophobic synthetic fibres in fabric manufacture has decreased use of rags as fluid wipes.

Further to all fabrics used for wiping today, e.g. washable cloth industrial towels, rags, disposable wipes or similar, they all get contaminated or polluted after being used for a short while, especially when they are used for wiping particles, high viscosity liquids or similar. Consequently, to get acceptable performance after using today's fabrics for a short while, a washing of or a change of said fabrics is needed, alternatively rearrangements of said fabrics have to be done trying to use parts of said fabrics which are not contaminated or polluted. Thus, to continue the wiping it is needed to wait for the washing of said fabrics, to replace said fabrics by new fabrics, or to rearrange said fabrics and risking that contaminated or polluted parts of said fabrics still are exposed to any object to be wiped.

In US, A, 5888604 fabrics for wiping purposes being composed of a multilayered flexible sheet are described, wherein said sheet is multilayered to enable production of fabrics having a correct thickness. Further, in US, A, 5607754 there is disclosed a stack of paper web products, wherein the formation of a stack only has a packaging purpose of the paper web products.

Multilayered solutions wherein individual sheets may be removed to prolong cleaning performances are disclosed in US, A, 4713274 and in US, A, 3785102. US, A, 4713274 relates to pads for removal of particulate matter wherein said pads have adhesive coatings, and US, A, 3785102 relates to a throw-away pad of tacky- or sticky-surfaced sheets for removing dust and dirt from e.g. shoe soles passing over said pad. Thus these pads of US, A, 4713274 and US, A, 3785102 perform by exposing sticky surfaces, and do not relate to fabrics for wiping purposes according to the present invention.

Obviously, as there is a need for fabrics having improved and prolonged wiping characteristics, a fabric according to the present invention, which fabric comprises a plurality of individual sheets, wherein a single individual sheet may easily be removed, fulfills a long-felt need.

### DISCLOSURE OF INVENTION

The present invention relates to a fabric for removing undesirable matter from an object by wiping, said fabric comprises a plurality of individual sheets, bonding means for joining said individual sheets together, wherein said bonding means permit a single individual sheet to be easily removed from said fabric.

Said fabric may be a wipe for domestic or commercial uses, or for industrial or hygienic applications. Further, said fabric may be oil wipes useful for wiping oils, solvent wipes useful for solvent cleaning, wet wipes useful for wet wiping, or any other wipe suitable for hygienic or household applications or suitable for removing any undesirable matter.

Said oil wipes have a small pore structure to permit the capillaries to exert a high force to remove oil or other liquids, e.g. high viscosity liquids. Moreover, oil wipes may be used in general machine shops, repair shops, engineering industry or similar for cleaning for example surfaces, machinery, parts, tools or hands.

Said solvent wipes are generally presaturated with a solvent, and solvent wipes may for example be used in printing industry and in cleaning metal surfaces prior to painting.

Said wet wipes comprise: wipes which are presaturated with a soapy water solution and used to remove dirt and water soluble stains, wipes which initially are in a dry state and used to absorb large volume spills, and wipes which are used for "wet dusting" and hold a small amount of fluid as a glue for dust and particles to be removed from a surface.

Said wipe suitable for hygienic or household applications may be e.g. household items such as hygienic wipes, kitchen towels, napkins or industrial wipes.

Said undesirable matter may be any fluid, e.g. domestic or industrial spills, high viscosity liquids, water, oil, solvents, chemicals or similar, any particles, any dust, any dirt, e.g. grease, stain or grime, or similar, or any kind of household dirt.

Said object may be any object needing removal of undesirable matter for example a whole body or any body part, e.g. hands, face, feet or similar, any part or any surface of e.g. machines, vehicles, printing plates, tools, floors, walls, furniture, tables or similar.

By "removing undesirable matter from an object by wiping" it is meant to remove undesirable matter from an object by wiping, rubbing, polishing, stroking or similar, using said fabric.

Further, each individual sheet may comprise any suitable natural or a synthetic material, e.g. of a woven or nonwoven type, tissue or similar, said sheet may be homogeneous or heterogeneous.

Said individual sheet may for example comprise fibres of polyamide, polyester, polypropylene, polyethylene or their co-polymers, or thermoplastic fibres, coresheath conjugated fibres (consisting of a polypropylene core and a polyethylene sheath) copolyester fibres or undrawn polypropylene fibres, or continuous filament, e.g. polyethylene terephtalate continuous filament, or, polyurethane, polyurea, cellulosic or cotton fibres, peat or polylactides. Further, said individual sheet may comprise two or several of the components listed herein or any mixture thereof.

Said bonding means for joining said individual sheets together may comprise for example techniques from conventional ply-bonding or any conventional gluing techniques i.e. use of hot or cold glue systems, and spot or strip gluing.

Any bonding means for joining said individual sheets together known to person skilled in the art may be used as long as said bonding means permit a single individual sheet to be easily removed from said fabric. By the wording "permit a single individual sheet to be easily removed from said fabric", it should be understood that normal action for removing undesirable matter from any object, i.e. wiping or similar, wherein said normal action involves a fabric according to the present invention, will not cause any separation of any of the individual sheets of said fabric. However, said wording "permit a single individual sheet to be easily removed from said fabric" means that any action with an intention to remove a single individual sheet, e.g. hand and/or finger manipulation or similar of said fabric, will result in a removal of said single individual sheet. Moreover, as said fabric comprises a plurality of individual sheets a removal of a single individual sheet will expose another individual sheet of said plurality of individual sheets.

According to one embodiment of the present invention a fabric is disclosed wherein said fabric comprises at least five individual sheets.

According to a further embodiment of the present invention a fabric is disclosed wherein said fabric comprises at least eight individual sheets.

According to still a further embodiment of the present invention a fabric is disclosed wherein said fabric comprises at least ten individual sheets.

According to even a further embodiment of the present invention a fabric is disclosed wherein said fabric comprises at least fifteen individual sheets.

A further embodiment of the present invention discloses a fabric wherein said fabric comprises a body. Said body may be anything that renders said fabric a volume, a desired form, a grip, a handle or similar. Further, said body may comprise, for example, at least one of a fibrous wadding, e.g. a non-absorbing fibrous wadding, a thick nonwoven material, a plastic or wooden material of any suitable form. Moreover, said body may for example comprise a handle, a grip or similar, or may have any desired form.

According to still a further embodiment of the present invention a fabric is disclosed wherein said plurality of individual sheets have coinciding edges and said plurality of individual sheets are bonded together by said bonding means at said edges. A fabric having coinciding edges and wherein the plurality of individual sheets are bonded together at the edges, will make it possible to split individual sheets, for example, by performing an act similar to "the opening of an envelop with a finger or a hand". A removal of a single individual sheet is easily performed either during the splitting act of individual sheets or as a separate step after the splitting act. Further, a fabric according to the present invention that is bonded together at said coinciding edges has a minimized risk of undesired splitting of said individual sheets.

An even further embodiment of the present invention discloses a fabric wherein said plurality of individual sheets is bonded together by said bonding means in spots or strips.

All variants of bonding as disclosed herein may be achieved by using techniques from conventional ply-bonding or any conventional gluing techniques i.e. use of hot or cold glue systems, and spot or strip gluing.

In a fabric according to the present invention said individual sheets may comprise a nonwoven material wherein said nonwoven material may for example be prepared by meltblowing, spunbonding or carding processes, and said nonwoven material may be further treated by, for example, fluid injection entanglement or any other entanglement, ultra sound or embossment. Said nonwoven material may be prepared of for example synthetic fibres, e.g. polymeric fibres or thermoplastic polymeric fibres or similar, natural fibres, e.g. wood pulp fibres, cotton fibres or linen fibres or other man made cellulose fibres such as viscose or rayon.

In a further fabric according to the present invention said individual sheets may comprise a tissue material, wherein said tissue material covers fibrous material based on cellulose or cellulose in combination with synthetic fibres.

A further fabric according to the present invention comprises individual sheets wherein each individual sheet is heterogeneous. A sheet is said to be heterogeneous when said sheet is composed of more than one material, wherein the materials may have different characteristics. Each heterogeneous individual sheet may for example comprise an absorbing layer and a liquid barrier layer, wherein said absorbing layer of any exposed individual sheet may constitute the outside of said fabric. Further, said liquid barrier layer may be any liquid impermeable layer and may for example comprise a thermoplastic film.

A fabric according to the present invention may optionally be disposable or completely recyclable.

### BRIEF DESCRIPTION OF DRAWINGS

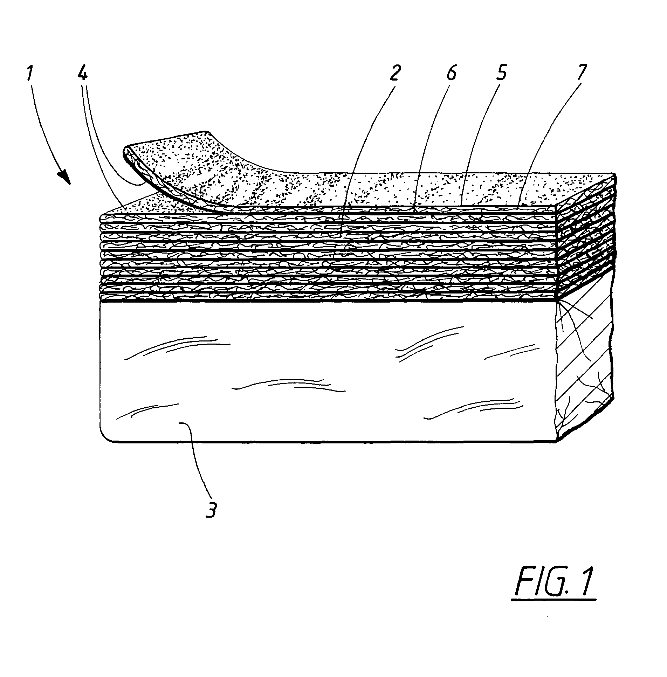

Figure 1 shows a side view of a fabric according to the present invention

### MODE FOR CARRYING OUT THE INVENTION

Figure 1 shows a fabric, 1, which comprises a plurality of individual sheets, 2, and a body, 3. Said individual sheets, 2, have coinciding edges and said coinciding edges have bonding means, 4, for joining said individual sheets, 2, together. Further, each of said individual sheets, 2, comprises an absorbing layer, 5, and a liquid barrier layer, 6. Moreover in figure 1, a single individual sheet, 7, is also shown which is partly removed from said fabric, 1.

## Claims

1. A fabric (1) for removing undesirable matter from an object by wiping, said fabric (1) comprises a plurality of individual sheets (2), bonding means (4) for joining said individual sheets (2) together **characterized in, that** said bonding means (4) permit a single individual (7) sheet to be easily removed from said fabric (1).

2. A fabric (1) according to claim 2 **characterized in, that** said fabric (1) comprises at least five individual sheets (2).

3. A fabric (1) according to claim 1 or 2 **characterized in, that** said fabric (1) comprises a body (3).

4. A fabric (1) according to claim 3 **characterized in, that** said body (3) comprises at least one of a fibrous wadding, a thick nonwoven material, a plastic material or wooden material.

5. A fabric (1) according to claim 3 or 4 **characterized in, that** said body (3) comprises a handle or a grip.

6. A fabric (1) according to any of claims 1 to 5 **characterized in, that** said individual sheets (2) have coinciding edges and are bonded together by said bonding means (4) at said edges.

7. A fabric (1) according to any of claims 1 to 6 **characterized in, that** said individual sheets (2) are bonded together by said bonding means (4) in spots or strips.

8. A fabric (1) according to any of claims 1 to 7 **characterized in, that** said individual sheets (2) comprise nonwoven material.

9. A fabric (1) according to any of claims 1 to 8 **characterized in, that** said individual sheets (2) comprise tissue material.

10. A fabric (1) according to any of claims 1 to 9 **characterized in, that** each of said individual sheets (2) is heterogeneous.

11. A fabric (1) according to claim 10 **characterized in, that** each of said individual sheets (2) comprises an absorbing layer (5) and a liquid barrier layer (6).
